# EUROPÄISCHE PATENTSCHRIFT

(11) **EP 1 625 177 B1**
(45) Veröffentlichungstag und Bekanntmachung des Hinweises auf die Patenterteilung: **02.08.2006**
(21) Anmeldenummer: 04732607.9
(22) Anmeldetag: 13.05.2004
(51) Int. Cl.: C08L 29/04, D21H 19/10, D21H 19/82, C09D 129/04

(54) **GRUNDIERUNGSMITTEL FÜR TRENNPAPIERE UND -FOLIEN**
PRIMING AGENT FOR SEPARATING PAPERS AND FILMS
APPRETS POUR PAPIERS ET FEUILLES DE SEPARATION

(30) Priorität: 22.05.2003 DE 10323204
(43) Veröffentlichungstag der Anmeldung: 15.02.2006
(73) Patentinhaber: Wacker Polymer Systems GmbH & Co. KG, 84489 Burghausen (DE)
(72) Erfinder: BACHER, Andreas, 84489 Burghausen (DE); FICKERT, Karl-Ernst, 84503 Altötting (DE); MAYER, Theo, 84387 Julbach (DE); LAUTENSCHLAGER, Hans, 84533 Haiming (DE)
(74) Vertreter: Schuderer, Michael
(86) Internationale Anmeldenummer: PCT/EP2004/005155
(87) Internationale Veröffentlichungsnummer: WO 2004/104093

(56) Entgegenhaltungen:
- EP-A- 0 399 079
- EP-A- 0 767 193
- EP-A- 0 799 711
- EP-A- 1 174 447
- DE-A- 1 771 128
- DE-A- 3 119 449
- DE-A- 3 622 820
- GB-A- 908 988
- US-A- 4 617 239
- DATABASE WPI Section Ch, Week 198404 Derwent Publications Ltd., London, GB; Class A14, AN 1984-021845 XP002293103 & JP 58 214596 A (KURARAY CO LTD) 13. Dezember 1983 (1983-12-13)

## Beschreibung

Die Erfindung betrifft ein Grundierungsmittel (Primer) für Trennpapiere und -folien auf der Basis von silanfunktionellen Polyvinylalkoholen in Kombination mit reaktiven Silikonpolymeren.

Zur Herstellung von Trennpapieren mit dehäsiven Eigenschaften gegenüber Klebemitteln werden die Papierträger mit einer Silikonschicht ausgestattet. Zur Verbesserung der Silikonschicht, insbesondere um die Penetration in das Trägermaterial während der Beschichtung zu verhindern, wird das Trägerpapier vor der Auftragung der Silikonschicht mit einer Grundierung versehen.

Aus der DE-A 3727078 ist bekannt, Lösungen von Metallkomplexen und Filmbildnern wie Polyvinylalkohol als Grundierung einzusetzen. In der DE-A 4425737 wird als Grundierung auf dem Papier ein Wasserglasstrich ausgebildet. In dem Verfahren der EP-A 396789 wird als Grundierung eine Suspension enthaltend filmbildende Substanzen, Weißpigment sowie Edelmetallkatalysator aufgetragen. Die DE-A 19512663 empfiehlt einen Pigmentstrich mit Aluminiumhydroxid. In der EP-A 399079 werden zur Grundierung Organosilane oder Organosiloxane, allein oder im Gemisch mit Bindemitteln wie Polyvinylalkohol, zur Grundierung aufgetragen. Die US-A 5358977 beschreibt den Einsatz von vernetzbaren, aromatischen oder aliphatischen Substanzen als Grundierungsmittel. Die JP-A 58/214596 beschreibt mit Silan-modifiziertem Polyvinylalkohol beschichtetes Papier, welches sich zur Herstellung von Release-Papier eignet.

Nachteilig bei den bisher eingesetzten Grundierungen ist deren häufig nicht befriedigende Bindung zur abhäsiven Silikonschicht und eine dadurch bedingte verlängerte Temperzeit für das vernetzende Silikon.

Es bestand daher die Aufgabe, ein Grundierungsmittel (Primer) zur Verfügung zu stellen, welches die obengenannten Nachteile behebt und sich insbesondere für die Herstellung von Trennpapieren mit schnellvernetzender, abhäsiver Silikonbeschichtung eignet.

Gegenstand der Erfindung ist eine Grundierungsmittel-Zusammensetzung für Trennpapiere und -folien enthaltend
I) mindestens einen silanhaltigen Polyvinylalkohol auf der Basis von vollverseiften oder teilverseiften Vinylester-Copolymerisaten mit einem Hydrolysegrad von 75 bis 100 Mol-% erhältlich durch radikalische Polymerisation von
   a) ein oder mehreren Vinylestern von unverzweigten oder verzweigten Alkylcarbonsäuren mit 1 bis 18 C-Atomen, wovon ein Anteil von 1 bis 30 Mol-%, bezogen auf Gesamtpolymer, ein oder mehrere 1-Alkylvinylester mit Alkylresten mit 1 bis 6 C-Atomen und von Carbonsäuren mit 1 bis 6 C-Atomen sind,
   b) 0.01 bis 10 Mol-% von einem oder mehreren Silan-haltigen, ethylenisch ungesättigten Monomeren, sowie gegebenenfalls
   c) weitere damit copolymerisierbare Comonomere,
   und Verseifung der damit erhaltenen Polymerisate, und
II) mindestens ein reaktives Silikon aus der Gruppe der H-Siloxane.

Geeignete Silan-haltige Polyvinylalkohole sind vollverseifte oder teilverseifte Vinylester-Polymerisate mit einem Hydrolysegrad von 75 bis 100 Mol-% und einem Anteil an Silan-haltigen Comonomereinheiten von 0.01 bis 10 Mol-%. Die vollverseiften Vinylester-Polymerisate haben einen Hydrolysegrad von vorzugsweise 97.5 bis 100 Mol-%, besonders bevorzugt 98 bis 99.5 Mol-%. Die teilverseiften Polyvinylester haben einen Hydrolysegrad von vorzugsweise 80 bis 95 Mol-%, besonders bevorzugt 86 bis 90 Mol-%. Die Höppler-Viskosität (nach DIN 53015 als 4 Gew.-%-ige wässrige Lösung) dient als Maß für das Molekulargewicht und für den Polymerisationsgrad der teil- oder vollverseiften, silanisierten Vinylesterpolymerisate, und beträgt vorzugsweise von 2 bis 50 mPas.

Geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, Vinylpivalat und Vinylester von α-verzweigten Monocarbonsäuren mit 5 bis 13 C-Atomen, beispielsweise VeoVa9^{R} oder VeoVa10^{R} (Handelsnamen der Firma Shell). Besonders bevorzugt ist Vinylacetat.

Bevorzugte 1-Alkylvinylester mit Alkylresten mit 1 bis 6 C-Atomen und von Carbonsäuren mit 1 bis 6 C-Atomen sind 1- Methylvinylacetat, 1-Ethylvinylacetat, sowie 1-Propylvinylacetat. In einer bevorzugen Ausführungsform werden 1 bis 30 Mol-% 1-Alkylvinylester, besonders bevorzugt 1-Methylvinylacetat, copolymerisiert.

Geeignete ethylenisch ungesättigte, silanhaltige Monomere b) sind beispielsweise ethylenisch ungesättigte Siliciumverbindungen der allgemeinen Formel (I) R¹SiR²₀₋₂ (OR³)₁₋₃, wobei R¹ die Bedeutung CH₂=CR⁴-(CH₂)₀₋₃ oder CH₂=CR⁴CO₂ (CH₂)₁₋₃ hat, R² die Bedeutung C₁- bis C₃-Alkylrest, vorzugsweise Methyl oder Ethyl, C₁₋bis C₃-Alkoxyrest, vorzugsweise Methoxy oder Ethoxy, oder Halogen, vorzugsweise Cl oder Br hat, R³ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R³ gegebenenfalls durch eine Ethergruppe unterbrochen sein kann, und R⁴ für H oder CH₃ steht.

Geeignete ethylenisch ungesättigte silanhaltige Monomere b) sind auch Silan-Gruppen enthaltende Meth(acrylamide), der allgemeinen Formel (II) CH₂= CR⁵-CO-NR⁶-R⁷-SiR⁸ₘ-(R⁹)₃₋ₘ, wobei m= 0 bis 2, R⁵ entweder H oder eine Methyl-Gruppe ist, R⁶ H oder eine Alkyl-Gruppe mit 1 bis 5 C-Atomen ist; R⁷ eine Alkylen-Gruppe mit 1 bis 5 C-Atomen oder eine bivalente organische Gruppe in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können. In Monomeren, in denen 2 oder mehrere R⁵- oder R⁹- Gruppen vorkommen, können diese identisch oder unterschiedlich sein.

Beispiele für solche (Meth)acrylamido-alkylsilane sind: 3-(Meth)acrylamido-propyltrimethoxysilane, 3-(Meth)acrylamidopropyltriethoxysilane, 3-(Meth)acrylamido-propyltri(β-methoxyethoxy)silane, 2-(Meth)acrylamido-2-methylpropyltrimethoxysilane, 2-(Meth)acrylamido-2-methylethyltrimethoxysilane, N-(2-(Meth)acrylamido-ethyl)aminopropyltrimethoxysilane, 3-(Meth)-acrylamido-propyltriacetoxysilane, 2-(Meth)acrylamido-ethyltrimethoxysilane, 1-(Meth)acrylamido-methyltrimethoxysilane, 3-(Meth)acrylamido-propylmethyldimethoxysilane, 3-(Meth)acrylamido-propyldimethylmethoxysilane, 3-(N-Methyl-(Meth)acrylamido)-propyltrimethoxysilane, 3-((Meth)acrylamido-methoxy)-3-hydroxypropyltrimethoxysilane, 3-((Meth)acrylamido-methoxy)-propyltrimethoxysilane, N,N-Dimethyl-N-trimethoxysilylpropyl-3-(Meth)acrylamido-propylammoniumchlorid und N, N-Dimethyl-N-trimethoxysilylpropyl-2-(Meth)acrylamido-2-methylpropylammoniumchlorid.

Bevorzugte ethylenisch ungesättigte, silanhaltige Monomere b) sind y-Acryl- bzw.. γ-Methacryloxypropyltri (alkoxy) silane, α-Methacryloxymethyltri(alkoxy)silane, γ-Methacryloxypropylmethyldi(alkoxy)silane; Vinylsilane wie Vinylalkyldi(alkoxy)-silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für bevorzugte silanhaltige Monomere sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)silan, Vinyltrichlotdilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Vinylsilane.

Als ethylenisch ungesättigte, silanhaltige Monomere b) werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Die Silane b) werden vorzugsweise in einer Menge von 0.01 bis 10.0 Mol-%, besonders bevorzugt 0.01 bis 2.0 Mol-% copolymerisiert

Neben den silanhaltigen Monomeren können noch ein oder mehrere weitere Comonomere c) in einem Anteil von vorzugsweise 0.1 bis 25 Mol-% enthalten sein. Beispielsweise Ethylen, Propylen, Isobutylen, Butadien, Isopren, Chloropren, Styrol, α-Methylstyrol, Vinylchlorid, Vinylidenchlorid, Vinylfluorid, Acrylnitril, Methacrylnitril; Alkylvinylether wie Ethylvinylether, n-Butylvinylether, iso-Butylvinylether, tert.-Butylvinylether, Cyclohexylvinylether, Octadecylvinylether, Hydroxybutylvinylether, Cyclohexandimethanolmonovinylether; Vinylmethylketon, N-Vinylformamid, N-Vinyl-N-methylacetamid, N-Vinylcaprolactam, N-Vinylpyrrolidon, N-Vinylimidazol. Geeignet sind auch Acrylsäure und Methacrylsäure sowie deren Ester und Amide wie Methyl-(meth)acrylat, Ethyl(meth)acrylat, n-Butyl(meth)acrylat, iso-Butyl(meth)acrylat, Ethylhexyl(meth)acrylat, Benzyl(meth)acrylat, 2-Hydroxyethyl(meth)acrylat, Hydroxypropyl(meth)acrylat, n-Hexyl(meth)acrylat, Isooctyl(meth)acrylat, iso-Decyl(meth)-acrylat, Lauryl(meth)acrylat, Methoxyethyl(meth)acrylat, Phenoxyethyl(meth)acrylat, Isobornyl(meth)acrylat, Stearyl(meth)-acrylat, Cyclohexyl(meth)acrylat, α-Chloracrylester, α-Cyanacrylester. Weitere Beispiele sind Vinylcarbazol, Vinylidencyanid, Vinylester, Acrylsäureanhydrid, Maleinsäureanhydrid, Malein- und Fumarsäureester, mit Sulfonsäure modifizierte Monomere wie 2-Acrylamido-2-methyl-propansulfonsäure und deren Alkalisalze, kationische Monomere wie Trimethyl-3-(1-(meth)acrylamid-1,1-dimethylpropyl)ammoniumchlorid, Trimethyl-3-(1-(meth)acrylamidopropyl)ammoniumchlorid, 1-Vinyl-2-methylimidazol und deren quartärnisierten Verbindungen.

Die silanhaltigen Vinylester-Polymerisate können in bekannter Weise mittels Polymerisation hergestellt werden; vorzugsweise durch Substanzpolymerisation, Emulsionspolymerisation, Suspensionspolymerisation oder durch Polymerisation in organischen Lösungsmitteln, besonders bevorzugt in alkoholischer Lösung. Die Einstellung des Molekulargewichts kann in dem Fachmann bekannter Weise durch Polymerisation in Gegenwart von Molekulargewichtsreglern erfolgen. Die Verseifung der silanhaltigen Vinylester-Polymerisate erfolgt in an sich bekannter Weise, zum Beispiel nach dem Band- oder Kneterverfahren oder im Rührkessel, im Alkalischen oder Sauren unter Zugabe von Säure oder Base. Nach Abschluß der Hydrolyse wird das Lösungsmittel abdestilliert und der silanhaltige Polyvinylalkohol wird als Pulver erhalten. Die wässrige Lösung der silanhaltigen Polyvinylalkohole kann gegebenenfalls auch mittels Sprühtrocknung verdüst werden, und der silanhaltige Polyvinylalkohol als Pulver gewonnen werden. Die Herstellung pulverförmiger, silanhaltiger Polyvinylalkohole ist beispielsweise in der DE-A 10232666 detailliert beschrieben. Gängige Trocknungsverfahren sind Wirbelschicht-, Dünnschicht-, Gefrier- und Sprühtrocknung.

Als reaktive Silikone aus der Gruppe der H-Siloxane werden vorzugsweise lineare, cyclische oder verzweigte Organopolysiloxane aus Einheiten der allgemeinen Formel (III) RₑH_{f}SiO_{(4-e-f)/2}, wobei e 0, 1, 2 oder 3 ist, f 0, 1 oder 2 ist, und die Summe von e + f ≤ 3 ist, mit der Maßgabe, dass durchschnittlich mindestens 2 Si-gebundene Wasserstoffatome vorliegen, und R einen einwertigen, SiC-gebundenen, gegebenenfalls substituierten Kohlenwasserstoffrest mit 1 bis 18 Kohlenstoffatomen bedeutet.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der ß-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest, sowie alle für R oben genannten Reste, die vorzugsweise mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und Halogengruppen substituiert sein können.

Bevorzugt handelt es sich bei dem Rest R um einen einwertigen Kohlenwasserstoffrest mit 1 bis 6 Kohlenstoffatomen, wobei der Methylrest besonders bevorzugt ist.

Bevorzugt werden Organopolysiloxane der allgemeinen Formel (IV) HₕR₃₋ₕSiO(SiR₂O)ₒ(SiRHO)ₚSiR₃₋ₕHₕ , wobei R die oben dafür angegebene Bedeutung hat, h 0, 1 oder 2 ist, o 0 oder eine ganze Zahl von 1 bis 1500 ist, und p 0 oder eine ganze Zahl von 1 bis 200 ist, mit der Maßgabe, dass die Organopolysiloxane der Formel (IV) durchschnittlich mindestens 2 Si-gebundene Wasserstoffatome enthalten, verwendet. Die Formel (IV) soll so verstanden werden, dass o Einheiten -(SiR₂O)- und p Einheiten -(SiRHO)- in beliebiger Weise, beispielsweise als Block oder statistisch, im Organopolysiloxanmolekül verteilt sein können.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogen-siloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Die Organopolysiloxane besitzen eine durchschnittliche Viskosität von vorzugsweise 10 bis 100000 mPa.s bei 25 °C, bevorzugt 15 bis 1000 mPa.s bei 25 °C.

Die Organopolysiloxane werden mit dem Fachmann bekannten Verfahren gewonnen und in die Form wässriger Emulsionen überführt.

Das Verhältnis der silanhaltigen Polyvinylalkohol-Komponente (I) zu der Silikon-Komponente (II) (fest/fest) beträgt von 99 : 1 bis 1 : 99, vorzugsweise 99 : 1 bis 50 : 50, besonders bevorzugt 99 : 1 bis 70 : 30. Die Grundierungsmittel-Zusammensetzung kann gegebenenfalls noch weitere Bindemittel und Additive enthalten. Typische weitere Additive und Bindemittel sind: Pigmente, Polyvinylalkohole, Carboxymethylcellulosen, Stärke, Stärkederivate, Alginate, Proteine, wässrige Polymardispersionen auf der Basis von (Meth)acrylsäure, (Meth)acrylsäureestern, Acrylnitril, Vinylacetat, Butadien, Styrol, sowie Plastifizierungsmittel wie Ethylenglycole, Glycerin, und Katalysatoren

Das Aufträgen der Grundierungsmittel-Zusammensetzung kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugs-vorrichtung, Messer- oder Rakel-Beschichtung oder mittels einer Luftbürste. Die Auftragung erfolgt vorzugsweise in einer Menge von 0.5 bis 5.0 g/m ² besonders bevorzugt 1.5 bis 3.0 g/m².

Die Verfahren und Rezepturen für die Release-Beschichtung von Trennpapieren und-folien sind dem Fachmann bekannt. Geeignete Träger sind Papier, vor allem Rohpapiere, sowie Folien wie Polyethylen-Folien, PET-Folien, Vliese, Gewebe und Trennrohkrepp. Nach der Grundierung des Trägermaterials wird mit den genannten Auftragsverfahren der Silikonstrich aufgetragen. Geeignete Silikonpolymere mit dehäsiven Eigenschaften sind dem Fachmann bekannt, sie umfassen beispielsweise.kettenförmige Dimethylpolysiloxane mit endständigen Hydroxygruppen, die unter der Einwirkung erhöhter Temperatur und in Gegenwart von Organozinnsalzen als Katalysator mit Kieselsäureestern kondensiert werden, oder auf dem Wege der Additionsvernetzung durch Reaktion von kettenförmigen Polymeren mit Vinylendgruppen mit Wasserstoffpolysiloxanen unter Temperatureinwirkung in Gegenwart von Platinkatalysatoren erhalten werden. Die Rezepturen für den Silikonstrich können gegebenenfalls noch weitere Additive enthalten, beispielsweise Filmbildehilfsmittel wie Polyvinylalkohol, Carboxymethylcellulosen, oder Weichmacher wie Ethylenglykol und Glycerin.

### Beispiele:

### Herstellung des silanmodifizierten Polyvinylalkohols:

In einer thermostatisierten Laborapperatur mit 2.5 Liter Füllvolumen wurden unter Stickstoff 375.5 g Methanol, 2.47 g Vinyltriethoxysilan, 24.7 g Isopropenylacetat und 309.1 g Vinyl-acetat vorgelegt. Unter Rühren wurden 785 mg t-Butyl-perpivalat zugegeben und der Ansatz auf 60°C aufgeheizt und während der Reaktion auf 60°C gehalten.
15 min nach Reaktionsbeginn wurden weitere 1.34 g t-Butyl-perpivalat zugegeben. Nach weiteren 30 min wurde eine Mischung aus 7.2 g Vinyltriethoxysilan, 72 g Isopropenylacetat und 900 g Vinylacetat über einen Zeitraum von 165 min mit einer Rate von 383.7 ml/h zudosiert. Gleichzeitig wurden weitere 785 mg t-Butylperpivalat zugegeben. 75 min und 105 min nach Reaktionsbeginn wurden je 448 mg, nach 135 min 224 mg und nach 165 min, 195 min bzw. 230 min nach Reaktionsstart je 113 mg t-Butyl-perpivalat zugegeben.
270 min nach Reaktionsbeginn wurden dem Ansatz 312 g Methanol zugefügt. Nach einer Reaktionsdauer von 420 min. wurde der Ansatz abgekühlt und verseift.

In einem Laborreaktor mit 2,5 Liter Inhalt wurden 265 g der methanolischen Polyvinylalkohol-Lösung mit weiteren 1250 g Methanol verdünnt. Die Lösung wurde auf 30°C aufgeheizt und mit methanolischer NaOH versetzt (13.8 g NaOH 46 %-ig in Wasser gelöst in 113 g Methanol).
Die Lösung wurde zunehmend trüber. Während der Gelphase wurde der Rührer auf höhere Drehzahl gestellt, um das Gel zu zerkleinern. Nach der Gelphase wurde noch 2 Stunden weiter reagieren gelassen, mit Essigsäure neutralisiert und der gebildete Feststoff abfiltriert, gewaschen und getrocknet.
Es wurde ein vollverseifter Polyvinylalkohol erhalten mit einer Höppler-Viskosität von 6 mPas (4 %-ig in Wasser)

### Beispiel 1:

48.4 g oben hergestellten modifizierten Polyvinylalkohols wurden langsam bei 90°C zu 351.6 g Wasser zugegeben, sodass eine 12.1 %-ige wässrige Lösung erhalten wurde.
350 g der wässrigen modifizierten Polyvinylalkohol-Lösung (12.1 %;pH 9.5) wurden in einem 400 ml Becherglas vorgelegt. Unter laufendendem Ultra Turax Rührer wurden 4.71 g eines H-haltigen Polysiloxans (Mn 2400 g/mol; Silikon V24) über 30 Sekunden langsam zugetropft. Die Drehzahl des Ultra Turax Rührers wurde für 1 bis 2 min. erhöht bis eine vollständige Emulsion mit einer Temperatur von 40°C bis 50°C entstand. Das Verhältnis des modifizierten Polyvinylalkohols zu dem Silikon beträgt 90:10 (fest/fest)

### Beispiel 2:

Analog Beispiel 1 wobei anstelle von 4.71 g eines H-haltigen Polysiloxans (Mn 2400 g/mol; Silikon V24) die gleiche Menge eines Vinyl- und H-haltigen Polysiloxans (Mn 5200 g/mol; Silikon HV70) eingesetzt wurde.

### Vergleichsbeispiel 1:

Es wurde nur eine 12.1 Gew.-%-ige wässrige Lösung des oben hergestellten modifizierten Polyvinylalkohols ohne Silikonanteil eingesetzt.

### Vergleichsbeispiel 2:

Es wurde nur eine 12.1 Gew.-%-ige wässrige Lösung eines nicht mit Silan modifizierten Polyvinylalkohols mit einer Höppler-Viskosität von 6 mPas (4 %-ig in Wasser) eingesetzt.

### Herstellung des Papiers:

Die Grundierungsmittel aus den Beispielen und Vergleichsbeispielen wurden jeweils mittels einer Laborleimpresse auf ein Rohpapier aufgetragen und entsprechend getrocknet (Beschichtung 1.5 g/m² bis 3 g/m²). Auf das so grundierte Papier wurde eine Trennschicht aus 100 Gew.-Teilen eines vinylterminierten Polysiloxans (Dehesive 920), 2.4 Gew.-Teilen eines H-haltigen Siloxans (Vernetzer V24) und 1 Gew.-Teil Pt-Katalysator (Katalysator OL) aufgetragen und das beschichtete Papier bei 150°C für 7 Sekunden getempert.

### Beschreibung der Testmethoden:

### Migration (MI):

Es wurde ein Testklebeband auf die frisch silikonisierte Seite aufgebracht, jeweils nach der in der Tabelle beschriebenen Curing Time (CT), und anschließend wieder abgezogen. Der Klebestreifen wurde so zusammengefaltet, dass sich die klebenden Oberflächen berührten. Dann wurden die Enden auseinandergezogen (Loop-Test). Weisen die aufeinander klebendenschichten eine gute Adhäsion auf, spricht dies für eine gute Haftung der Silikonschicht auf dem Substrat. Die Benotung beider Tests erfolgt in Schulnoten von 1 bis 6: 1 = sehr gut, 6 = sehr schlecht

### Rub Off (RO):

Jeweils nach der in der Tabelle beschriebenen Curing Time (CT) reibt man einmal mit dem Finger kräftig über die silikonisierte Oberfläche und betrachtet diese Stelle in schräg einfallendem Licht. Treten an dieser Stelle Helligkeitsunterschiede oder Streifen auf, haftet das Siliconprodukt nicht optimal. Zudem reibt man die Silikonschicht mehrmals stark mit dem Finger und beobachtet die Menge der Abriebsteilchen. Die Benotung beider Tests erfolgt in Schulnoten von 1 bis 6.

### Testergebnisse:

| | Bsp. 1 | Bsp. 1 | Bsp. 2 | Bsp. 2 | Vbsp. 1 | Vbsp. 1 | Vbsp. 2 | Vbsp. 2 |
|---|---|---|---|---|---|---|---|---|
| CT | MI | RO | MI | RO | MI | RO | MI | RO |
| 5 s | 1 | 3 | 1 | 1 | 4 | 5 | 6 | 6 |
| 6 s | 1 | 1 | | | 2 | 2 | 6 | 6 |
| 7 s | | | | | 1 | 1 | 4 | 5 |
| 8 s | | | | | | | 4 | 4 |

Die Ergebnisse zeigen, dass man mit den erfindungsgemäßen Grundierungsmitteln schon nach kurzer Vernetzungszeit hervorragende Bindung erhält. Mit silanhaltigen Polyvinylalkoholen allein (Vbsp. 1) wird dies erst nach wesentlich längerer Vernetzungszeit erhalten.

## Patentansprüche

1. Grundierungsmittel-Zusammensetzung für Trennpapiere und - folien enthaltend
I) mindestens einen silanhaltigen Polyvinylalkohol auf, der Basis von vollverseiften oder teilverseiften Vinylester-Copolymerisaten mit einem Hydrolysegrad von 75 bis 100 Mol-% erhältlich durch radikalische Polymerisation von
a) ein oder mehreren Vinylestern von unverzweigten oder verzweigten Alkylcarbonsäuren mit 1 bis 18 C-Atomen, wovon ein Anteil von 1 bis 30 Mol-%, bezogen auf Gesamtpolymer, ein oder mehrere 1-Alkylvinylester mit Alkylresten mit 1 bis 6 C-Atomen und von Carbonsäuren mit 1 bis 6 C-Atomen sind,
b) 0.01 bis 10 Mol-% von einem oder mehreren Silanhaltigen, ethylenisch ungesättigten Monomeren, sowie gegebenenfalls
c) weitere damit copolymerisierbare Comonomere,
und Verseifung der damit erhaltenen Polymerisate, und
II) mindestens ein reaktives Silikon aus der Gruppe der K-Siloxane.

2. Grundierungsmittel nach Anspruch 1 **dadurch gekennzeichnet, dass** der silanhaltige Polyvinylalkohol durch Copolymerisation mit Vinylacetat erhalten wird.

3. Grundierungsmittel nach Anspruch 1 oder 2, **dadurch gekennzeichnet, dass** ein oder mehrere 1-Alkylvinylesser aus der Gruppe umfassend 1- Methylvinylacetat, 1-Ethylvinylacetat, sowie 1-Propylvinylacetat, copolymerisiert werden

4. Grundierungsmittel nach Anspruch 1 bis **3, dadurch gekennzeichnet, dass** der silanhaltige Polyvinylalkohol durch Copolymerisation von einem oder mehreren ethylenisch ungesättigten, silanhaltigen Monomeren erhalten wird aus der Gruppe umfassend
ethylenisch ungesättigte Siliciumverbindungen der allgemeinen Formel (I) R¹SiR²₀₋₂(OR³)₁₋₃, wobei R¹ die Bedeutung CH₂=CR⁴- (CH₂)₀₋₃ oder CH₂=CR⁴CO₂ (CH₂)₁₋₃ hat, R² die Bedeutung C₁- bis C₃-Alkylrest, C₁- bis C₃-Alkoxyrest oder Halogen hat, R³ ein unverzweigter oder verzweigter, gegebenenfalls substituierter Alkylrest mit 1 bis 12 C-Atomen ist oder ein Acylrest mit 2 bis 12 C-Atomen ist, wobei R³-gegebenenfalls durch eine Ethergruppe unterbrochen sein kann, und R⁴ für H oder CH₃ steht, und
Silan-Gruppen enthaltene Meth(acrylamide), der allgemeinen Formel (II) CH₂= CR⁵-CO-NR⁶-R⁷-SiR⁸ₘ- (R⁹)₃₋ₘ , wobei m= 0 bis 2, R⁵ entweder H oder eine Methyl-Gruppe ist, R⁶ H oder eine Alkyl-Gruppe mit 1 bis 5 C-Atomen ist, R⁷ eine Alkylen-Gruppe mit 1 bis 5 C-Atomen oder eine bivalente organische Gruppe in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können.

5. Grundierungsmittel nach Anspruch 4, **dadurch gekennzeichnet, dass** der silanhaltige Polyvinylalkohol durch Copolymerisation von einem oder mehreren ethylenisch ungesättigten, silanhaltigen Monomeren erhalten wird aus der Gruppe umfassend γ-Acryl- bzw. γ-Methacryloxypropyltri-(alkoxy) silane, α-Methacryloxymethyltri(alkoxy)silane, γ-Methacryloxypropyl-methyldi(alkoxy)silane, Vinylalkyldi(alkoxy)silane, Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste enthalten sein können

6. Grundierungsmittel nach Anspruch 1 bis 5, **dadurch gekennzeichnet, dass** 0.01 bis 2.0 Mol-% ethylenisch ungesättigte, silanhaltige Monomere copolymerisiert werden.

7. Grundierungsmittel nach Anspruch 1 bis 6 **dadurch gekennzeichnet, dass** als reaktive Silikonkomponente II) ein oder mehrere enthalten sind aus der Gruppe umfassend lineare, cyclische oder verzweigte Organopolysiloxane aus Einheiten der allgemeinen Formel (III) RₑH_{f}Si_{(4-e-f)/2}, wobei e 0, 1, 2 oder 3 ist, f 0, 1 oder 2 ist, und die Summe von e + f < 3 ist, mit der Maßgabe, dass durchschnittlich mindestens 2 Si-gebundene Wasserstoffatome vorliegen, und R einen einwertigen, SiC-gebundenen, gegebenenfalls substituierten Kohlenwasserstoffrest mit 1 bis 18 Kohlenstoffatomen bedeutet.

8. Grundierungsmittel nach Anspruch 7 **dadurch gekenzeichnet, dass** als reaktive Silikonkomponente II) ein oder mehrere enthalten sind aus der Gruppe umfassend Organopolysiloxane der allgemeinen Formel (IV) HₕR₃₋ₕSiO(SiR₂O)ₒ(SiRHO)ₚSiR₃₋ₕHₕ, wobei R die oben dafür angegebene Bedeutung hat, h 0, 1 oder 2 ist, o 0 oder eine ganze Zahl von 1 bis 1500 ist, und p 0 oder eine ganze Zahl von 1 bis 200 ist, mit der Maßgabe, dass die Organopolysiloxane der Formel (IV) durchschnittlich mindestens 2 Si-gebundene Wasserstoffatome enthalten.

9. Grundierungsmittel nach Anspruch 1 bis 8, **dadurch gekenzeichnet, dass** das Verhältnis der silanhaltigen Polyvinylalkohol-Komponente (I) zu der Silikon-Komponente (II) (fest/fest) von 99 : 1 bis 1 : 99 beträgt.

10. Verwendung der Grundierungsmittel nach Anspruch 1 bis 9 in Verfahren zur Release-Beschichtung von Trennpapieren und -folien, wobei nach Auftragen der Grundierung auf einen Träger ein Silikonstrich aufgetragen wird.

## Claims

1. Primer composition for release papers and release films, comprising
I) at least one silane-containing polyvinyl alcohol based on fully or partly hydrolyzed vinyl ester copolymers having a degree of hydrolysis of 75 to 100 mol%, obtainable by free-radically polymerizing
a) one or more vinyl esters of unbranched or branched alkylcarboxylic acids having 1 to 18 carbon atoms, of which a fraction of 1 to 30 mol%, based on total polymer, are one or more 1-alkylvinyl esters having alkyl radicals having 1 to 6 carbon atoms and of carboxylic acids having 1 to 6 carbon atoms,
b) 0.01 to 10 mol% of one or more silane-containing, ethylenically unsaturated monomers, and if desired
c) further comonomers copolymerizable therewith,
and hydrolysing the resultant polymers, and
II) at least one reactive silicone from the group of the H-siloxanes.

2. Primer according to Claim 1, **characterized in that** the silane-containing polyvinyl alcohol is obtained by copolymerization with vinyl acetate.

3. Primer according to Claim 1 or 2, **characterized in that** one or more 1-alkylvinyl esters from the group consisting of 1-methylvinyl acetate, 1-ethylvinyl acetate, and 1-propylvinyl acetate are copoly-merized.

4. Primer according to Claim 1 to 3, **characterized in that** the silane-containing polyvinyl alcohol is obtained by copolymerizing one or more ethylenically unsaturated, silane-containing monomers from the group consisting of
ethylenically unsaturated silicon compounds of the general formula (I) R¹SiR²₀₋₂(OR³)₁₋₃, where R¹ has the definition CH₂=CR⁴- (CH₂)₀₋₃ or CH₂=CR⁴CO₂(CH₂)₁₋₃, R² has the definition C₁ to C₃ alkyl radical, C₁ to C₃ alkoxy radical, or halogen, R³ is an unbranched or branched, unsubstituted or substituted alkyl radical having 1 to 12 carbon atoms, or an acyl radical having 2 to 12 carbon atoms, it being possible for R³ to be interrupted if desired by an ether group, and R⁴ is H or CH₃, and
meth(acrylamides) containing silane groups, of the general formula (II) CH₂= CR⁵-CO-NR⁶-R⁷-SiR⁸ₘ-(R⁹)₃₋ₘ, where m= 0 to 2, R⁵ is either H or a methyl group, R⁶ is H or an alkyl group having 1 to 5 carbon atoms; R⁷ is an alkylene group having 1 to 5 carbon atoms or a divalent organic group in which the carbon chain is interrupted by an oxygen or nitrogen atom, R⁸ is an alkyl group having 1 to 5 carbon atoms, R⁹ is an alkoxy group having 1 to 40 carbon atoms, which may be substituted by further heterocycles.

5. Primer according to Claim 4, **characterized in that** the silane-containing polyvinyl alcohol is obtained by copolymerizing one or more ethylenically unsaturated, silane-containing monomers from the group consisting of γ-acryloyloxy- or γ-methacryloyloxypropyltri(alkoxy)silanes, α-methacryloyloxymethyltri(alkoxy)silanes, γ-methacryloyloxypropylmethyldi(alkoxy)silanes, vinylalkyldi-(alkoxy)silanes and vinyltri(alkoxy)silanes, in which alkoxy groups present may be, for example, methoxy, ethoxy, methoxyethylene, ethoxyethylene, methoxypropylene glycol ether and/or ethoxypropylene glycol ether radicals.

6. Primer according to Claim 1 to 5, **characterized in that** 0.01 to 2.0 mol% of ethylenically unsaturated, silane-containing monomers are copolymerized.

7. Primer according to Claim 1 to 6, **characterized in that** as reactive silicone component II) there are one or more present from the group consisting of linear, cyclic or branched organopolysiloxanes composed of units of the general formula (III) RₑH_{f}SiO_{(4-e-f)/2}, where e is 0, 1, 2 or 3, f is 0, 1 or 2, and the sum of e + f is ≤ 3, with the proviso that there are on average at least 2 Si-bonded hydrogen atoms, and R is a monovalent, SiC-bonded, unsubstituted or substituted hydrocarbon radical having 1 to 18 carbon atoms.

8. Primer according to Claim 7, **characterized in that** as reactive silicone component II) there are one or more present from the group consisting of organopolysiloxanes of the general formula (IV) HₕR₃₋ₕSiO(SiR₂O)ₒ(SiRHO)ₚSlR₃₋ₕHₕ, where R has the definition indicated for it above, h is 0, 1 or 2, o is 0 or an integer from 1 to 1500, and p is 0 or an integer from 1 to 200, with the proviso that the organopolysiloxanes of the formula (IV) contain on average at least 2 Si-bonded hydrogen atoms.

9. Primer according to Claim 1 to 8, **characterized in that** the ratio of the silane-containing polyvinyl alcohol component (I) to the silicone component (II) (solids/solids) is from 99 : 1 to 1 : 99.

10. Use of the primer according to Claim 1 to 9 in processes for release-coating release papers and release films, where following application of the prime coat to a backing a silicone coat is applied.

## Revendications

1. Composition de primaire pour papiers et feuilles de séparation comprenant
I) au moins un alcool polyvinylique contenant des silanes à base d'esters vinyliques-copolymérisats entièrement ou partiellement saponifiés avec un degré d'hydrolyse de 75 à 100% mol. qui peut être obtenu par polymérisation radicalaire de
a) un ou plusieurs esters vinyliques d'acides alkylcarboxyliques non ramifiés ou ramifiés comprenant 1 à 18 atomes de carbone, dont une partie de 1 à 30% mol., par rapport au polymère total, est constituée de un ou plusieurs ester(s) 1-alkylvinylique(s) avec des radicaux alkyle comportant 1 à 6 atomes de carbone et d'acides carboxyliques avec 1 à 6 atomes de carbone,
b) 0,01 à 10% mol. d'un ou plusieurs monomères éthyléniquement insaturés contenant des silanes, ainsi que, éventuellement,
c) d'autres comonomères ainsi copolymérisables et saponification des polymérisats ainsi obtenus et
II) au moins un silicone réactionnel du groupe des siloxanes H.

2. Primaire selon la revendication 1, **caractérisé en ce que** l'alcool polyvinylique contenant des silanes est obtenu par copolymérisation au moyen d'acétate vinylique.

3. Primaire selon la revendication 1 ou 2, **caractérisé en ce que** un ou plusieurs ester(s) 1-alkylvinylique(s) est(sont) copolymérisé(s) à partir du groupe comprenant l'acétate 1-méthylvinylique, l'acétate 1-éthylvinylique, de même que l'acétate 1-propylvinylique.

4. Primaire selon les revendications 1 à 3, **caractérisé en ce que** l'alcool polyvinylique contenant des silanes est obtenu par copolymérisation d'un ou de plusieurs monomère(s) contenant des silanes éthyléniquement insaturés à partir du groupe comprenant des composés de silicium éthyliquement insaturés de la formule générale (I) R¹SiR²₀₋₂(OR)₁₋₃, dans laquelle R¹ représente CH₂=CR⁴ - (CH₂)₀₋₃ ou CH₂=CR⁴CO₂ (CH₂)₁₋₃ , R ² représente un radical alkyle en C₁ à C₃ , un radical alkoxy en C₁ à C₃ ou un halogène, R³ est un radical alkyle non réticulé ou réticulé, éventuellement substitué comportant 1 à 12 atomes de carbone ou est un radical acyle avec 2 à 12 atomes de carbone, R³ pouvant être éventuellement interrompu par un groupe éther, et R⁴ représentant H ou CH₃ et,
les méth(acrylamides) comprenant des groupes silane, de la formule générale (II) CH₂=CR⁵-CO-NR⁶⁻R⁷-SiR⁸ₘ-(R⁹)₃₋ₘ, dans laquelle m=0 à 2, R⁵ est soit H soit un groupe méthyle, R⁶ est soit H, soit un groupe alkyle avec 1 à 5 atomes de carbone, R⁷ et un groupe alkylène avec 1 à 5 atomes de carbone ou un groupe organique bivalent dans lequel la chaîne carbone est interrompue par un atome de O ou N, R⁸ est un groupe alkyle avec 1 à 5 atomes de carbone, R⁹ est un groupe alkoxy avec 1 à 40 atomes de carbone, qui peuvent être substitués par d'autres hétérocycles.

5. Primaire selon la revendication 4, **caractérisé en ce que** l'alcool polyvinylique contenant des silanes est obtenu par copolymérisation d'un ou de plusieurs monomère(s) contenant des silanes éthyliquement insaturés, à partir du groupe des silanes γ-acryl- ou γ-méthacryloxypropyltri(alkoxyliques), des silanes α-méthacryloxyméthyltri (alkoxyliques), des silanes γ-méthacryloxypropyl-méthyldi(alkoxyliques), des silanes vinylalkyldi(alkoxyliques), des silanes vinyltri(alkoxyliques), des radicaux pouvant être présents sous la forme de groupes alkoxy, par exemple les éthers méthoxylique, éthoxylique, méthoxyéthylénique, éthoxyéthylénique, méthoxypropylèneglycolique ou éthoxypropylèneglycolique.

6. Primaire selon les revendications 1 à 5, **caractérisé en ce que** 0,01 à 2,0% mol. de monomères contenant des silanes éthyléniquement insaturés sont copolymérisés.

7. Primaire selon les revendications 1 à 6, **caractérisé en ce que** l'on trouve, comme composante du silicone réactionnel (II) un ou plusieurs éléments du groupe comprenant des organopolysiloxanes linéaires, cycliques ou ramifiés à partir d'unités de la formule générale (III)
RₑH_{f}SiO_{(4-e-f)/2}, dans laquelle e est égal à 0, 1, 2 ou 3, f est égal à 0, 1, ou 2, et la somme de e + f est inférieure ou égale à 3, étant entendu qu'en moyenne au moins 2 atomes d'hydrogène à liaison Si sont présents et que R représente un radical d'hydrocarbure monovalent, à liaison SiC, éventuellement substitué avec 1 à 18 atomes de carbone.

8. Primaire selon la revendication 7, **caractérisé en ce que** l'on trouve, comme composante du silicone réactionnel (II) un ou plusieurs éléments du groupe comprenant des organopolysiloxanes de la formule générale (IV)
HₕR₃₋ₕSiO(SiR₂O)ₒ(SiRHO)ₚSiR₃₋ₕHₕ, dans laquelle R a la signification indiquée ci-dessus, h est égal à 0, 1, ou 2, o est égal à 0 ou à un nombre entier compris entre 1 et 1 500, et p est égal à 0 ou à un nombre entier compris entre 1 et 200, étant entendu que les organopolysiloxanes de la formule générale (IV) comprennent en moyenne au moins 2 atomes d'hydrogène à liaison Si.

9. Primaire selon les revendications 1 à 8, **caractérisé en ce que** le rapport de la composante de l'alcool polyvinylique contenant des silanes (I) à la composante du silicone (II) est de 99 : 1 à 1 : 99 (solide/solide).

10. Utilisation du primaire selon les revendications 1 à 9 dans des procédés pour l'enduction de libération de papiers et de feuilles de séparation, une couche de silicone étant appliquée sur un support après l'application du primaire.
